# EUROPEAN PATENT APPLICATION

(11) **EP 1 207 466 A2**
(43) Date of publication of application: **22.05.2002**
(21) Application number: 01309147.5
(22) Date of filing: 29.10.2001
(51) Int. Cl.: G06F 17/30

(54) **Data distribution system and method**

(30) Priority: 16.11.2000 JP 2000349470
(71) Applicant: Pioneer Corporation, Meguro-ku, Tokyo (JP); Increment P Corporation, Tokyo (JP)
(72) Inventor: Nishiyama, Sumio, c/o Increment P Corporation, Meguro-ku, Tokyo (JP)
(74) Representative: Haley, Stephen

(57) **Abstract**

A plurality of data files D1 to Dm into which data to be distributed is divided by function are registered in a navigation server S for conducting data distribution service, and the navigation server S selects any data files from among the plurality of data files D1 to Dm, combines the selected data files into distributed data, and distributes the distributed data to a user terminal T.

## Description

This invention relates to a data distribution system and a data distribution method for transmitting various pieces of data stored in a server to a user terminal in response to a request of the user.

In recent years, distribution service of various pieces of data using a data communication network such as the Internet has become widespread.

Such data distribution service includes, for example, map data distribution service wherein map data is stored in a map information data server managed by a service provider and map data is transmitted from the map information data server to the user terminal connecting via a data communication network such as the Internet, thereby displaying a map image desired by the user; the map data distribution service is used for providing map data for a vehicle-installed car navigation system, a mobile telephone, etc.

In addition, the data distribution service includes information providing service of providing various pieces of information such as stock price information, weather information, employment information, town information, event information, commodity information, news, etc.

In such various data distribution services, the data display capability, function, range, and the like vary depending on the type of user's terminal system for receiving the data distribution service and thus hitherto, a method of previously storing the corresponding distributed data to each user's terminal system in a data server and upon connecting from the user, detecting the terminal system type by the data server and transmitting the corresponding data to the terminal system has been adopted.

For example, in the map data distribution service, the reception function of distributed map data and the display capability of a map image vary depending on the type of user terminal which is a microcomputer, a vehicle-installed navigation system, or a mobile terminal such as a PDA (Personal Digital Assistant) or a mobile telephone, and thus the map data corresponding to each user's terminal system is stored in the data server.

Thus, in the data distribution system in the related art as described above, it becomes necessary to previously create and store several data pieces corresponding to the user's terminal systems for the information of the same contents in the data server, and the data amount is enormous.

To change the stored data, all data corresponding to the user' s terminal systems needs to be changed and enormous efforts become necessary for the data change processing; this is a problem.

The user who uses the data distribution system as described above may not require all distributed data regardless of the capability of the used terminal and may want to get necessary data as early as possible.

For example, to distribute map data to a navigation system, generally the data amount of the map data is large and it takes time in transmitting the map data, but the user might want to get only road information of the map data as early as possible.

However, the data distribution system in the related art distributes the data corresponding to the user' s terminal system impartially and thus involves a problem of being incapable of meeting the user's requirements as described above.

The invention is intended for solving the problems in the data distribution system in the related art as described above.

That is, it is an object of the invention to make it possible to reduce the storage amount of data in a data server for distributing data, easily change the stored data, and further distribute data fitted for user's requirements in a data distribution system for conducting distribution service of various pieces of data.

To accomplish the above-described object, according to a first aspect of the invention, there is provided a data distribution system comprising a data distribution server for conducting data distribution service, said data distribution server comprising a plurality of data files into which distributed data is divided by function, and data distribution means for selecting any data files from among the plurality of data files, combining the selected data files into distributed data, and distributing the distributed data.

The data distribution system according to the first aspect of the invention can be applied to all information providing services of providing map information, stock price information, weather information, employment information, town information, event information, commodity information, news, and any other information.

Various pieces of data to be distributed by the distribution service is classified by type of contents and further classified by function for each type. The data is implemented as a separate data file with each function as one unit for registration in the data distribution server.

Upon reception of a data distribution request from the user who receives the data distribution service, the data distribution means selects data files fitted for the user's requirement and the terminal type from among the plurality of registered data files in response to the user requirement and the type of terminal for receiving distribution of data, combines the selected data files into the data to be distributed to the terminal of the user, and distributes the distributed data.

As described above, according to the first aspect of the invention, the data to be distributed is finely classified by function for each type and is registered as separate data files and at the data distributing time, the data files are combined appropriately in response to the user's requirement and the terminal type and are distributed. Thus, the need for previously registering map data in response to the function and capability of each terminal type as in the related art is eliminated and all types of user terminals can be covered simply by registering general data, so that the storage amount of data in the data distribution server can be reduced drastically and the data distribution efficiency can be improved.

If change occurs in the distributed data stored in the data distribution server, only the data file corresponding to the change needs to be updated, making it possible to drastically reduce the labor for data update.

For the user receiving data distribution, data is not impartially distributed and only the necessary data at the time is distributed in response to the use, so that the data transmission efficiency is drastically improved and if the user uses a mobile telephone, etc., as a terminal, for example, it is made possible to get data promptly.

The data distribution system according to a second aspect of the invention is characterized by the fact that the data distribution means responds to a formation condition set at a terminal to receive data distribution from said data distribution server and selects data files fitted for the formation condition from among the plurality of data files in addition to the configuration of the first aspect of the invention to accomplish the above-described object.

According to the data distribution system according to the second aspect of the invention, the formation of the data to be distributed is set based on the condition entered by the user in the terminal for receiving the data distribution service, and the data distribution means of the data distribution server re-forms the data files fitted for the condition entered in the terminal into the data to be distributed.

Accordingly, the user can receive distribution of only the desired data.

The data distribution system according to a third aspect of the invention is characterized by the fact that identification codes by function are assigned to the plurality of data files and any desired identification code is specified at the terminal, whereby the formation condition of the distributed data is set, in addition to the configuration of the second aspect of the invention to accomplish the above-described object.

According to the data distribution system according to the third aspect of the invention, the identification codes are assigned to the data files classified by function and the user can easily set the condition to form the data to be received by entering the identification code of any desired data function in the terminal.

The data distribution system according to a fourth aspect of the invention is characterized by the fact that the data files are files of data by function into which data concerning a map is divided by navigation function in addition to the configuration of the first aspect of the invention to accomplish the above-described object.

According to the data distribution system according to the fourth aspect of the invention, the map data for navigation is classified into road data concerning roads, background data concerning facilities other than roads, such as buildings and railroads on the map, comment data concerning text, etc., displaying description, etc., on the map, point information data concerning information of the place where the user is at present, the destination, etc., and the like according to the data type, and further classified by function, whereby, for example, the road data and the background data are combined into the map data to be distributed in response to the terminal type such as a vehicle-installed navigation system or a mobile telephone or any desired condition entered by the user in the terminal.

The data distribution system according to a fifth aspect of the invention is characterized by the fact that a required function for navigation is specified at a navigation system of a terminal, whereby the formation condition of the distributed data is set, in addition to the configuration of the fourth aspect of the invention to accomplish the above-described object.

According to the data distribution system according to the fifth aspect of the invention, the user can easily set the formation condition of the distributed data by specifying the function required for receiving navigation in the user-desired mode in the navigation system, for example, the voice guidance function if the user is to receive voice navigation.

The data distribution system according to a sixth aspect of the invention is characterized by the fact that the data file is at least one of road data, background data, comment data, guidance data, and route calculation data in addition to the configuration of the fourth aspect of the invention to accomplish the above-described object, and the data files selected from among the data files are re-formed into the data to be distributed.

The data distribution system according to a seventh aspect of the invention is characterized by the fact that the data files are files of data by function of at least a display function, a locating function, a search function, and a route calculation function in addition to the configuration of the fourth aspect of the invention to accomplish the above-described object.

According to the data distribution system according to the seventh aspect of the invention, the files of databy function are selected in response to the purpose, whereby the files are re-formed into the data to be distributed and the data is distributed to the user.

To accomplish the above-described object, according to an eighth aspect of the invention, there is provided a data distribution method comprising the steps of registering a plurality of data files into which distributed data is divided by function in a data distribution server for conducting data distribution service, and selecting any data files from among the plurality of data files, combining the selected data files into distributed data, and distributing the distributed data.

The data distribution method according to the eighth aspect of the invention can be applied to all information providing services of providing map information, stock price information, weather information, employment information, town information, event information, commodity information, news, and any other information.

Various pieces of data to be distributed by the distribution service is classified by type of contents and further classified by function for each type. The data is implemented as a separate data file with each function as one unit for registration in the data distribution server.

When a data distribution request is sent from the user who receives the data distribution service to the data distribution server, the data files fitted for the user's requirement and the terminal type are selected from among the plurality of registered data files in response to the user requirement and the type of terminal for receiving distribution of data, are combined into the data to be distributed, and the distributed data is distributed.

As described above, according to the eighth aspect of the invention, the data to be distributed is finely classified by function for each type and is registered as separate data files and at the data distributing time, the data files are combined appropriately in response to the user's requirement and the terminal type and are distributed. Thus, the need for previously registering map data in response to the function and capability of each terminal type as in the related art is eliminated and all types of user terminals can be covered simply by registering general data, so that the storage amount of data in the data distribution server can be reduced drastically and the data distribution efficiency can be improved.

If a change occurs in the distributed data stored in the data distribution server, only the data file corresponding to the change needs to be updated, making it possible to drastically reduce the labor for data update.

For the user receiving data distribution, data is not impartially distributed and only the necessary data at the time is distributed in response to the use, so that the data transmission efficiency is drastically improved and if the user uses a mobile telephone, etc., as a terminal, for example, it is made possible to get data promptly.

The data distribution system according to a ninth aspect of the invention is characterized by the fact that in response to a formation condition set at a terminal to receive data distribution from the data distribution server, data files fitted for the formation condition are selected from among the plurality of data files in addition to the configuration of the eighth aspect of the invention to accomplish the above-described object.

According to the data distribution system according to the ninth aspect of the invention, the formation of the data to be distributed is set based on the condition entered by the user in the terminal for receiving the data distribution service, and in the data distribution server, the data files fitted for the condition entered in the terminal are selected and re-formed into the data to be distributed.

Accordingly, the user can receive distribution of only the desired data.

The data distribution system according to a tenth aspect of the invention is characterizedby the fact that identification codes by function are assigned to the plurality of data files and an identification code is specified at the terminal, whereby the formation condition of the distributed data is set in addition to the configuration of the ninth aspect of the invention to accomplish the above-described object.

According to the data distribution system according to the tenth aspect of the invention, the identification codes are assigned to the data files classified by function and the user can easily set the condition to form the data to be received by entering the identification code of any desired data function in the terminal.

The data distribution system according to an eleventh aspect of the invention is characterized by the fact that the data files are files of data by function into which data concerning a map is divided by navigation function in addition to the configuration of the eighth aspect of the invention to accomplish the above-described object.

According to the data distribution system according to the eleventh aspect of the invention, the map data for navigation is classified into road data concerning roads, background data concerning facilities other than roads, such as buildings and railroads on the map, comment data concerning text, etc., displaying description, etc., on the map, point information data concerning information of the place where the user is at present, the destination, etc., and the like according to the data type, and further classified by function, whereby, for example, the road data and the background data are combined into the map data to be distributed in response to the terminal type such as a vehicle-installed navigation system or a mobile telephone or any desired condition entered by the user in the terminal.

The data distribution system according to a twelfth aspect of the invention is characterized by the fact that a required function for navigation is specified at a navigation system of a terminal, whereby the formation condition of the distributed data is set, in addition to the configuration of the eleventh aspect of the invention to accomplish the above-described object, and the data files selected from among the data files are re-formed into the data to be distributed.

### In the Drawings;

In the accompanying drawings:
FIG. 1 is a conceptual drawing to show a data communication network for distributing data;
FIG. 2 is a schematic representation to conceptually show the data file configuration in one embodiment of the invention;
FIG. 3 is a classification table to show classification of the data files in the embodiment of the invention;
FIG. 4 is a conceptual drawing to show a procedure for forming unit data in the embodiment of the invention; and
FIG. 5 is a conceptual drawing to show the file format of the unit data in the embodiment of the invention.

Referring now to the accompanying drawings, there is shown a preferred embodiment of the invention.

A data distribution system according to the invention can be applied to all information providing services of providing stock price information, weather information, employment information, town information, event information, commodity information, news, and any other information. However, in the description that follows, the case where the data distribution system according to the invention is applied to map information providing service of providing map data to vehicle-installed navigation systems and mobile terminals such as PDAs and mobile telephones is taken as an example.

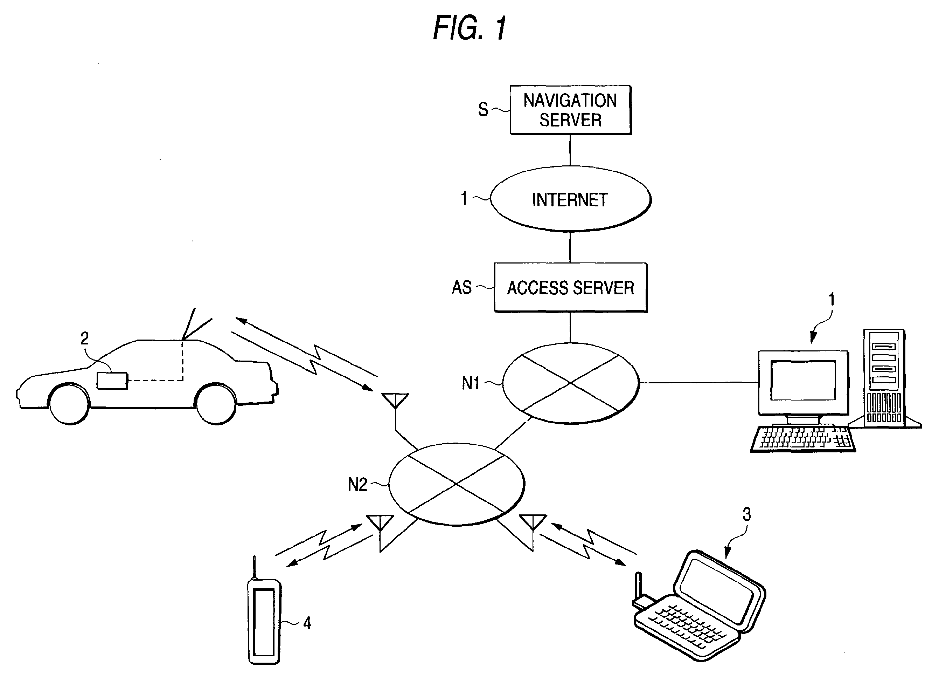

FIG. 1 shows a data communication network for transmitting map data distributed to microcomputers, vehicle-installed navigation systems, and mobile terminals such as PDAs andmobile telephones in one embodiment of the data distribution system according to the invention.

In FIG. 1, a navigation server S for providing map data for the user is connected to Internet I.

A microcomputer 1 of a user terminal for receiving the map data provided from the navigation server S accesses the Internet I via a public switched telephone network N1 and an access server AS, whereby it is connected to the navigation server S. Further, a vehicle-installed navigation system 2, a PDA 3, a mobile telephone 4, and other mobile terminals (not shown) access the Internet I via a mobile communication network N2, the public switched telephone network N1, and the access server AS, whereby they are connected to the navigation server S.

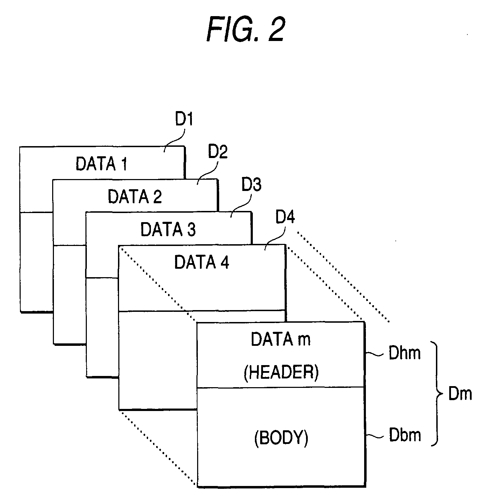

FIG. 2 is a conceptual drawing to show the file configuration of data when map data is registered in the navigation server S.

In FIG. 2, the data is finely divided with each function as one unit for each type of data, each unit is implemented as one data file D1 to Dm, and the data files D1 to Dm are registered in a database of the navigation server S individually, as described later.

Each of the data files D1 to Dm is made up of a head Dhm recording management data (header Dhm) indicating details of the file and a body Dbm recording the data contents.

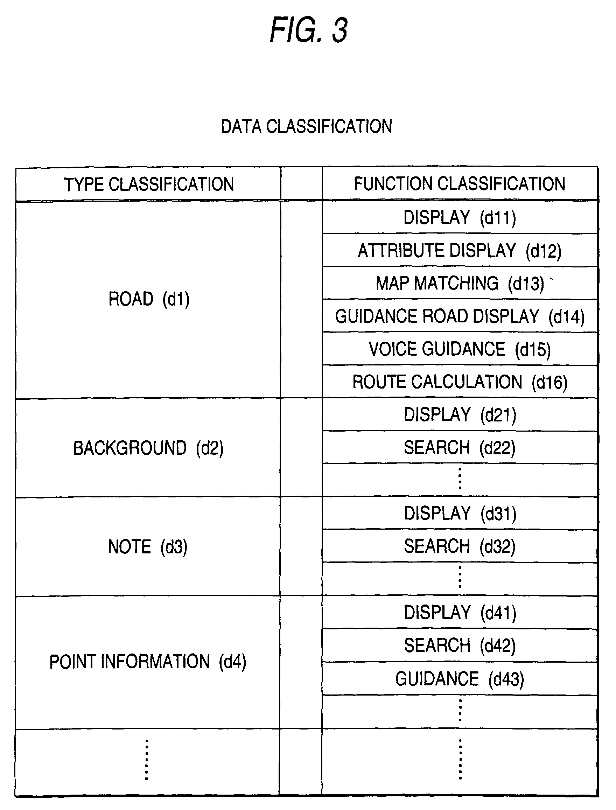

FIG. 3 is a classification table to show an example of classification of the data files D1 to Dm making up the map data.

In the example in FIG. 3, the map data is classified into road data d1 concerning roads, background data d2 concerning facilities other than roads, such as buildings and railroads on the map, comment data (note) d3 concerning text, etc., displaying description, etc., on the map, and point information data d4 concerning information of the place where the user is at present, the destination, etc., according to the data type.

The data classified according to the type as described above is further finely classified according to the function for each type.

That is, the road data d1 is further classified into data for each function such as road display data d11 made up of node data indicating each point on a road as coordinates (latitude and longitude) and link data of each road, attribute display data d12 indicating the road type (national road, etc.,), the number of lanes, traffic control (one-way traffic, etc.,), map matching data d13 used for high-accuracy navigation using a gyro, etc., guidance road display data d14 for displaying a road for guidance, voice guidance data d15 for providing guidance in voice, and route calculation data d16 indicating the route, distance, etc., between two points on the map.

The background data d2 is classified into data for each function such as display data d21 for displaying landmarks of facilities, railroads, etc., and search data d22 for the landmarks.

The comment data d3 is classified into data for each function such as display data d31 for displaying comments of road description, traffic signs, etc., on the map and search data d32 for the comments.

The point information data d4 is classified into data for each function such as display data d41 for displaying the place where the user is at present, etc., search data d42 for the destination point of a facility, a tourist attraction, etc., and guide data d43 into the target point.

Each of the data d11..., the data d21..., the data d31..., and the data d41... classified for each function is implemented as one data file D1 to Dm and is registered in the database of the navigation server S individually with a code given.

The navigation server S stores an application program for reading any data files from among the data files D1 to Dm registered in the database in response to a user's request transmitted from a user terminal, re-forming the read data files into unit data, and distributing the unit data to the user terminal, as described later.

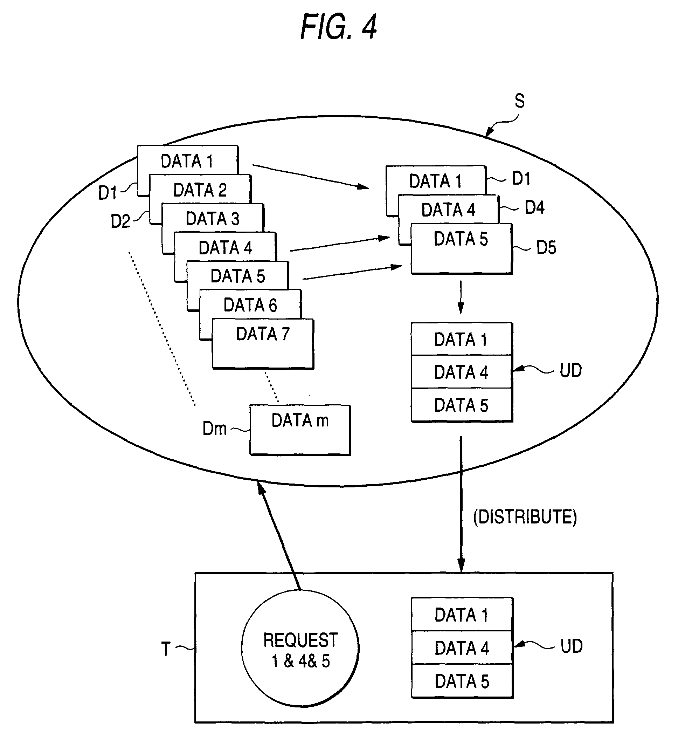

FIG. 4 is a conceptual drawing to show a procedure for forming the unit data to be distributed to the user terminal.

In FIG. 4, when user-set request data (in the example in the figure, data for making a request for data 1, data 4, and data 5) is transmitted from a user terminal, the navigation server S reads the data files D1, D4, and D5 corresponding to the user request from among the data files D1 to Dm registered in the database, forms unit data UD from the data files D1, D4, and D5, and distributes the unit data UD to the user terminal T such as the microcomputer 1, the vehicle-installed navigation system 2, the PDA 3, or the mobile telephone 4 making the request by the stored application program.

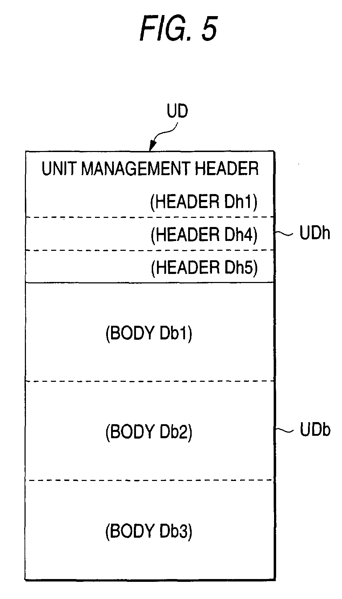

FIG. 5 is a conceptual drawing to show an example of the file format of the unit data UD. In the figure, the unit data UD provides one file structure as a whole consisting of a unit management header UDh implemented as a set of the heads Dh1, Dh4, and Dh5 of the data files D1, D4, and D5 read from the database and a unit body UDb implemented as a set of the bodies Db1, Db4, and Db5 of the data files D1, D4, and D5.

The unit data UD distributed to the user terminal T causes a screen of a map image and others corresponding to the present user request to be displayed on a display installed in the user terminal T based on the functions provided by the data files D1, D4, and D5 making up the unit data UD in the user terminal T.

For example, the following are possible as modes of distributing the unit data UD responsive to the user request as described above:
a) When the user wants to display only a map image
   The user sets code numbers d11, d21, and d31 of the functions required for displaying a map image in the used user terminal T, such as the microcomputer 1, the vehicle-installed navigation system 2, the PDA 3, or the mobile telephone 4.
   The navigation server S reads the road display data d11, the background display data d21, and the comment data d31 corresponding to the code numbers d11, d21, and d31 from the database, forms unit data UD of a set of the data d11, the data d21, and the data d31, and transmits the unit data UD to the user terminal T.
   Accordingly, only the map image made up of the road, its surrounding facilities, and comments of road signs, an explanatory note, etc., is displayed on the display of the user terminal T.
b) When the user wants road guidance in voice
   The user sets code numbers d11 and d15 of the functions required for road guidance in voice in the user terminal T.
   The navigation server S reads the road display data d11 and the voice guidance data d15 corresponding to the code numbers d11 and d15 from the database, forms unit data UD of a set of the data d11 and the data d15, and transmits the unit data UD to the user terminal T.
   Accordingly, a road image is displayed on the display of the user terminal T and further guide voice indicating right turn, left turn, etc., is output.
c) When the user wants guidance while seeing a map
   The user sets code numbers d11, d14, d21, and d31 of the functions required for road guidance with a map screen in the user terminal T.
   The navigation server S reads the road display data d11, the voice guidance data d15, the background display data d21, and the comment data d31 corresponding to the code numbers d11, d14, d21, and d31 from the database, forms unit data UD of a set of the data d11, the data d15, the data d21, and the data d31, and transmits the unit data UD to the user terminal T.
   Accordingly, a road image and a mark indicating the place where the user is at present are displayed on the display of the user terminal T and further a guidance road image is superposed on the displayed road screen on the display.
d) When the user wants navigation using a gyro, etc., (highly accurate guidance using map matching)
   The user sets code numbers d13 and d16 of the functions required for road guidance with a map screen in the user terminal T.
   The navigation server S reads the map matching data d13 and the route calculation data d16 corresponding to the code numbers d13 and d16 from the database, forms unit data UD of a set of the data d13 and the data d16, and transmits the unit data UD to the user terminal T.
   Accordingly, a data image indicating a map matching road, the route and distance between two points on the map, etc., are displayed on the display of the user terminal T.
e) When the user wants tourist information
   The user sets code number d43 of the function required for tourist information in the user terminal T and at this time, if the user wants a guide with a map, he or she also sets the code numbers d11, d21, and d31 as in a) above.
   The navigation server S reads the guide data d43 and the road display data d11, the background display data d21, and the comment data d31 corresponding to the code number d43 and further the code numbers d11, d21, and d31 from the database, forms unit data UD of a set of the data, and transmits the unit data UD to the user terminal T.
   Accordingly, an image indicating a tourist point is displayed on the display of the user terminal T and if the user wants a guide with a map, a surrounding map image containing the tourist point is displayed.
f) When the user wants to search for a peripheral facility
   The user sets code number d42 of the function required for searching for a peripheral facility in the user terminal T.
   The navigation server S reads the search data d42 corresponding to the code number d42 from the database, forms unit data UD of a set of the data, and transmits the unit data UD to the user terminal T.

Accordingly, a search screen containing the point information of the peripheral facility is displayed on the display of the user terminal T.

As described above, according to the data distribution system, in the navigation server S, the map data to be distributed is finely classified by function for each type and is registered as the separate data files D1 to Dm and the data files D1 to Dm are combined appropriately in response to a request from the user terminal and are distributed. Thus, the need for previously registering map data in response to the function and capability of each user terminal as in the related art is eliminated and all types of user terminals can be covered simply by registering general data, so that the storage amount of data can be reduced drastically.

If change occurs in the map data stored in the navigation server S, only the data file corresponding to the change needs to be updated, making it possible to drastically reduce the labor for data update.

Only the necessary data at the time is distributed to the user terminal T in response to the use desired by the user, so that the data transmission efficiency is drastically improved and if the user uses a mobile telephone, etc., as a user terminal, for example, it is made possible to get data promptly.

## Claims

1. A data distribution system comprising:
a data distribution server for conducting data distribution service, said data distribution server comprising:
a plurality of data files structured individually by dividing distributed data by function; and
data distribution means for selecting any data files from among the plurality of data files, combining the selected data files into distributed data, and distributing the distributed data.

2. The data distribution system as claimed in claim 1 wherein the data distribution means responds to a formation condition set at a terminal to receive data distribution from said data distribution server and selects data files fitted for the formation condition from among the plurality of data files.

3. The data distribution system as claimed in claim 2 wherein identification codes by function are assigned to the plurality of data files and any desired identification code is specified at the terminal, whereby the formation condition of the distributed data is set.

4. The data distribution system as claimed in claim 1 wherein the data files are files of data by function into which data concerning a map is divided by navigation function.

5. The data distribution system as claimed in claim 4 wherein a required function for navigation is specified at a navigation system of a terminal to set the formation condition of the distributed data.

6. The data distribution system as claimed in claim 4 wherein the data file is at least one of road data, background data, comment data, guidance data, and route calculation data.

7. The data distribution system as claimed in claim 4 wherein the data files are files of data by function of at least a display function, a locating function, a search function, and a route calculation function.

8. A data distribution method comprising the steps of:
registering a plurality of data files structured independently by dividing distributed data by function in a data distribution server for conducting data distribution service; and
selecting any data files from among the plurality of data files, combining the selected data files into distributed data, and distributing the distributed data.

9. The data distribution method as claimed in claim 8 wherein in response to a formation condition set at a terminal to receive data distribution from the data distribution server, data files fitted for the formation condition are selected from among the plurality of data files.

10. The data distribution method as claimed in claim 9 wherein identification codes by function are assigned to the plurality of data files and an identification code is specified at the terminal to set the formation condition of the distributed data.

11. The data distribution method as claimed in claim 8 wherein the data files are files of data by function into which data concerning a map is divided by navigation function.

12. The data distribution method as claimed in claim 11 wherein a required function for navigation is specified at a navigation system of a terminal for setting the formation condition of the distributed data.
